# EUROPÄISCHE PATENTSCHRIFT

(11) **EP 0 934 392 B1**
(45) Veröffentlichungstag und Bekanntmachung des Hinweises auf die Patenterteilung: **18.12.2002**
(21) Anmeldenummer: 97909369.7
(22) Anmeldetag: 08.10.1997
(51) Int. Cl.: C11D 3/48

(54) **Verwendung von Reinigungsmitteln enthaltend 3-(N-Butylacetamino)-propionsäureethylester als insektiziden Wirstoff.**
Use of detergents comprising 3-(N-butylacetamino)-propionic ethyl ester as insect repellant agent.
Utilisation des produits de nettoyage contenant de l'ester ethylique de l'acid 3-(N-butylacetamino)-propionique comme agent insecticide.

(30) Priorität: 17.10.1996 DE 19642957
(43) Veröffentlichungstag der Anmeldung: 11.08.1999
(73) Patentinhaber: MERCK PATENT GmbH, 64293 Darmstadt (DE)
(72) Erfinder: JALALIAN, Mohammad, D-64283 Darmstadt (DE); PRENZEL, Maria, Elisabeth, D-64584 Biebesheim (DE); MARTIN, Roland, D-69469 Weinheim (DE); ROSELL I OLLER, Francesco, E-08006 Barcelona (ES)
(86) Internationale Anmeldenummer: EP9705525
(87) Internationale Veröffentlichungsnummer: WO98017772

(56) Entgegenhaltungen:
- EP-A- 0 097 813
- EP-A- 0 346 709
- EP-A- 0 619 363
- US-A- 4 127 672

## Beschreibung

Die Erfindung betrifft die Verwendung von Reinigungsmittel aller Art, die das Insektenabwehrmittel 3-(N-Butylacetamino)propionsäureethylester enthalten und somit zur Reinigung und zur gleichzeitigen Abwehr von Küchenschaben und/oder Ameisen von den zu reinigenden Oberflächen und Räumen dienen.

Insekten stellen für den Menschen in mancherlei Hinsicht eine Beeinträchtigung oder gar eine Bedrohung dar. Neben den durch einige Insektenarten angerichteten Schäden (z.B. die Vernichtung ganzer Ernten) werden sowohl der Mensch als auch viele Tiere von den verschiedensten Insekten auf die eine oder andere Weise belästigt, gestochen und anderweitig geplagt. Dabei kann es zu Infektionen und zur Übertragung von gefährlichen Krankheiten kommen.

Hauptwaffe im Kampf gegen die Insekten sind die Insektizide, deren Verwendung und Toxizitätsprofile aber nicht immer unproblematisch sind. Diese Gifte haben oft unerwünschte Effekte auf Mensch und Tier, so daß deren Gebrauch begrenzt oder sogar verboten ist.

Bei der Verhinderung der direkten Belästigung sind Maßnahmen wie der Einsatz von Insektenvernichtungsmitteln aber gar nicht unbedingt erforderlich. Manche Insekten, wie z.B. Kakerlaken , können sowieso nicht vollständig ausradiert werden, und daher werden die Bemühungen mehr in Richtung Abwehr dieser Insekten verstärkt als in Richtung Vernichtung dieser.

Ferner steht heutzutage der Umweltschutz sehr im Vordergrund, und so werden bevorzugt vorbeugende Maßnahmen ergriffen.

Daher werden bei der Insektenbekämpfung nun eher Insektenabwehrmittel, sogenannte Repellentien, den Insektiziden vorgezogen, da diese lediglich darauf ausgerichtet sind, Insekten davon abzuhalten, sich auf bestimmten Oberflächen oder in Räumen aufzuhalten und einzunisten.

Lange Zeit schon werden Chemikalien zur Abwehr oder Vernichtung von z.B. Kakerlaken, Fliegen, Stechmücken oder Ameisen vermarktet, doch viele davon sind gefährlich für Mensch und Tier oder besitzen einen sehr unangenehmen Geruch, so daß deren negativen Eigenschaften ihren Einsatz stark limitiert.

Somit werden im Hinblick auf die relativ geringe Anzahl an wirkungsvollen, aber doch aus toxikologischer Sicht unbedenklichen Insekt-Repellentien, auf diesem Gebiet weiterhin große Anstrengungen unternommen, geeignete Produkte zur Verfügung zu stellen.

Aus der Literatur (US-A-3,018,217) ist beispielsweise bekannt, ein Insektenabwehrmittel in ein Poliermittel für Haushaltsböden einzuarbeiten, wobei Dibutylsuccinat als Repellent eingesetzt wurde. Auch aus der EP 0 525 893 sind Mittel zur Reinigung mit verschiedenen Insekt-Repellentien, wie z.B. N,N-Diethyl-m-toluolamid (DEET), beschrieben.

Aufgabe der vorliegenden Erfindung war es, ein Insekt-Repellent zur Verfügung zu stellen, das wirkungsvoll Küchenschaben und/oder Ameisen fernhält, einfach anzuwenden und toxikologisch unbedenklich für Mensch und Haustiere ist.

Die Substanz 3-(N-Butylacetamino)propionsäureethylester stellt ein lang bekanntes und bewährtes Insektenabwehrmittel dar und wird auch als solches in kosmetischen Formulierungen eingesetzt. Das Insektrepellent kann im Handel bezogen werden, z.B. von der Firma Merck KGaA, Darmstadt.

Diese Substanz wurde mit ihren hervorragenden Eigenschaften bezüglich Haut- und Schleimhautverträglichkeit ohne toxische, allergisierende oder sensibilisierende Eigenschaften bisher in kosmetischen Zubereitungen verwendet, um den Menschen direkt vor Angriffen von z.B. Stechmücken oder fliegen zu schützen.

Ferner weist diese Substanz ein hohe chemische Stabilität, d.h. keine Hydrolysierbarkeit, keine Photooxidierbarkeit, keine Oxidierbarkeit und hohe Thermostabilität auf.

Aus der US-A-4127672 ist die Verwendung dieser Substanz in Mitteln für kosmetische und technische Zwecke zur Abwehr stechendes, blutsaugender Insekten, insbesondere Moskitos, bekannt.

Überraschenderweise wurde nun gefunden, daß 3-(N-Butylacetamino)-propionsäureethylester auch in Formulierungen von Reinigungsmitteln aller Art eingearbeitet werden kann, um Küchenschaben und/oder Ameisen nachhaltig von den damit gereinigten Oberflächen, die harter oder weicher Natur sein können, zur vertreiben und fernzuhalten.

Da in der Erfindung ein Insekt-Repellent eingesetzt wird, das bisher am Menschen direkt verwendet wurde, können somit die erfindungsgemäßen Reinigungsmittel als toxikologisch unbedenklich gelten und sind den bisher bekannten Mittel gegen Küchenschaben und/oder Ameisen damit hoch überlegen sind.

Gegenstand der Erfindung ist somit die Verwendung eines Reinigungsmittels, das dadurch gekennzeichnet ist, daß es eine wirksame Menge, die zur Abwehr von Insekten nach der Behandlung mit diesem Reinigungsmittel ausreicht, des Insektenabwehrmittels 3-(N-Butylacetamino)-propionsäureethylester enthält zur Abwehr von Küchenschaben und/oder Ameisen.

Gegenstand der Erfindung ist ferner die Verwendung des Insektenabwehrmittels 3-(N-Butylacetamino)propionsäureethylester in Reinigungsmittel zur Abwehr von Insekten.

Ferner ist Gegenstand der Erfindung ein Verfahren zur Reinigung und zur gleichzeitigen Abwehr der Insekten, weiches dadurch gekennzeichnet ist, daß man ein Reinigungsmittel, enthaltend eine wirksame Menge des Insektenabwehrmittels 3-(N-Butylacetamino)-propionsäureethylester, ausreichend zur Abwehr der insekten, auf die zu reinigenden Oberflächen anwendet.

Die erfindungsgemäßen Reinigungsmittel enthalten vorzugsweise 0.1 bis 20 Gew.-% 3-(N-Butylacetamino)-propionsäureethylester, insbesondere bevorzugt 0.1 bis 10 Gew. %, ganz besonders bevorzugt 0.1 bis 6 Gew.-%.

Das Insekt-Repeilent der vorliegenden Erfindung kann in Reinigungsmittel aller Art, vorzugsweise in Haushaltsreiniger, eingearbeitet werden. Diese Haushaltsreiniger können gegebenenfalls zusätzlich neben dem erfindungsgemäßen 3-(N-Butylacetamino)-propionsäureethylester ein oder mehrere Insektenabwehrmittel jeweils in einer Menge von 0,1 bis 20 Gew.-% enthalten. Dieses können sowohl synthetische Substanzen sein, wie z. B. Diethyltoluamid, 2-Ethyl-1,3-hexandiol, Dimethylphthalat, oder Dibutylsuccinat aber auch natürliche oder naturidentische, als Insektenabwehrmittel wirkende ätherische Öle, wie z. B. Menthol-, Citronella-, oder Lemon-Öl.

Vorzugsweise wird das Insektenabwehrmittel in Lösungen (wäßrig oder wäßrig-alkoholisch) oder Dispersionen (oder dispergiert in einem pulverigen Träger), in Reinigungsmittelzusammensetzungen wie Waschmittel, Boden- oder Wandreiniger (Fliesenreiniger), Fensterreiniger, Polster- oder Teppichreiniger auch in Shampooform, in feste oder flüssige Seife, in Wachs, in Cremes oder in Sprays eingearbeitet.

Es kann in jede andere geeignete Formulierung eingebracht werden, in die es von Nutzen sein könnte. Beispielsweise in Insektizide oder antibakterielle Mittel, Möbelpolituren, Bodenwachse oder auch in Mittel zur Reinigung von bestimmten Handwerkszeugen, die beispielsweise zur Tierhaltung oder bei der Gärtnerei verwendet werden.

Die Anwendung der erfindungsgemäßen Reinigungsmittel führt dazu, daß nach dem Reinigen der harten oder weichen Oberflächen die Insekten den Kontakt mit der gereinigten Oberfläche vermeiden, da sich durch den Reinigungsprozeß ein Film dieses Reinigungsmittels, enthaltend das Insekt-Repellent, gebildet hat.

Zusätzlich werden die Insekten von der Umgebung des gereinigten Fläche durch den Geruch dieses Mittels fern gehalten.

So können Ameisen und/oder Küchenschaben davon abgehalten werden, in Vorratsräume einzudringen, indem man Regale, Wände und Boden mit einem erfindungsgemäßen Reinigungsmittel reinigt.

Ebenso kann das Reinigen von Polstern oder Teppichen mit geeigneten Shampoos die Insekten davon abhalten, sich dort einzunisten und ihre Eier darin abzulegen.

Ferner können Waschmittel verhindern, daß Insekten in die Wäscheschränke und somit in die Kleider gelangen.

Aus der vorangegangenen Beschreibung ist es offensichtlich, daß die Zusammensetzung der erfindungsgemäßen Reinigungsmittel verschiedenster Art sein kann, und die Reinigungsmittel zu vielen unterschiedlichen Zwecken verwendet werden können.

Jedoch wird die Erfindung vorzugsweise im Bereich der Haushaltsreiniger angewendet.

Solche Reiniger sind aus einer Vielzahl von Komponenten zusammengesetzt.

Beispielsweise sind organische (Seifen) oder vorzugsweise synthetisch organische, grenzflächenaktive, waschaktive Stoffe (Tenside) enthalten, die anionischer, amphoterischer, ampholytischer, zwitterionischer, nichtionischer oder kationischer Natur sein können, oder auch eine Mischung davon. Die anionenaktiven Waschrohstoffe sind dabei weitaus am wichtigsten. Viele solcher Detergentien sind beschrieben in "Surface Active Agents and Detergent", Vol. II. by Schwartz, Perry and Berch (1958 Interscience Publisher, Inc.). Aber auch in sämtlichen großen Nachschlagewerken der Chemie (z.B. Römpp, Beilstein etc.) kann der Fachmann die gebräuchlichsten Tenside nachlesen.

Weiterhin sind Gerüststoffe (Builder genannt), gegebenenfalls Bleichmittel, Duft- und Hilfsstoffe enthalten.

Als anionisches Tensid kann jedes dafür geeignete Detergens verwendet werden. Normalerweise umfassen die Tenside auf Anionenbasis beispielsweise Fettalkoholsulfate, Paraffinsulfonate, Fettsäurekondensationsprodukte und Alkylbenzolsulfonate und -phosphonate oder auch Alkylsulfate und -phosphate. Vorzugsweise sind die anionischen Tenside Natriumsalze, aber auch Kalium-, Ammonium- und Triethanolammoniumsalze werden oft eingesetzt in einigen flüssigen Zusammensetzungen. Die Alkylreste sind vorzugsweise geradkettig und besitzen vorzugsweise 12 bis 16 Kohlenstoffatome.

Synergistische Kombinationen mit vor allem Fettalkoholpolyglycolethern haben sich als Basis vieler Zusammensetzungen bewährt.

Geeignete nichtionogene Rohstoffe sind Kondensationsprodukte lipophiler Komponenten und niedriger Alkylenoxide oder Polyalkylenoxyeinheiten. Vorzugsweise werden z.B. die erwähnten Fettalkoholpolyglycolether, die Alkylphenolpolyglykolether oder auch Fettsäurealkylamide eingesetzt.

Auch kationische Tenside können verwendet werden, so z.B. aliphatische quartäre Ammoniumsalze.

Die sogenannten "Builder"-Stoffe sind ebenfalls allgemein bekannt und können anorganische oder organischer Natur, wasserlöslich oder unlöslich . Vorzugsweise werden Stoffe wie Polyphosphate, z.B. Pentanatriumtriphosphat, Carbonate oder Bicarbonate, z.B. Soda oder Natriumbicarbonat, Zeolithe, z.B. Zeolith A, Polycarboxylate, z.B. Natriumsalze der Copolymere aus Acrylsäure und Maleinsäure, oder auch Borate und Silikate, z.B. Natriumschichtsilikat.

Als weitere Hilfs- oder Zusatzstoffe können Duftstoffe und Farbstoffe, Bleichmittel oder Aufheller, Antistatikmittel, antibakterielle Mittel, Fungizide, schaumbildende Reagentien oder auch antischaumbildende Stoffe, Antioxidantien oder Enzyme zugesetzt werden.

Die oben aufgeführten Stoffe für die Zusammensetzung von Reinigungsmittel sollen beispielhaft sein und für die erfindungsgemäßen Formulierungen keinen begrenzenden Charakter haben.

Alle im Stand der Technik bekannten Substanzen, die für die Formulierung solcher Reinigungsmittel beschrieben sind, können erfindungsgemäß mit 3-(N-Butylacetamino)-propionsäureethylester erfindungsgemäß gemischt werden.

Die erfindungsgemäßen Reinigungsmittel können in fester Form, als Pulver, als Tabletten, in Block- oder Stückform, als Paste, als Gel, in flüssiger Form, als Wachs, als Creme, als Emulsion, als Dispersion, als Schaum oder als Spray (Aerosolform) oder als andere geeignete Formen, angepaßt an den jeweiligen Einsatz, vorliegen.

Die quantitativen Zusammensetzung der einzelnen Komponenten für die verschiedenen Formulierungsmöglichkeiten sind dem Fachmann auf diesem Gebiet wohl bekannt und müssen hier nicht näher aufgezählt werden.

Erfindungsgemäß beträgt der Gehalt an 3-(N-Butylacetamino)-propionsäureethylester in den jeweiligen Formulierungen 0.1 bis 20 Gew.-%, vorzugsweise 0.1 bis 10 Gew.-%, ganz besonders bevorzugt 0.1 bis 6 Gew. %.

Vorzugsweise liegen die erfindungsgemäßen Reinigungsmittel als wäßrige oder wäßrig-alkoholische Lösung, als Waschmittel, als Wachs, als Gel, als Emulsion, als Creme, als Shampoo, als Spray, als Dispersion oder als Festprodukt vor.

Die Methoden zur Herstellung solcher Produkte sind dem Fachmann auf dem Gebiet der Seifen- und Detergentienherstellung allgemein bekannt, und brauchen hier nicht näher erläutert werden.

Vorzugsweise wird zur Herstellung einer wäßrigen oder wäßrigalkoholischen Lösung das Insekt-Repellent in einem geeigneten Lösungsmittel, wie Wasser (wobei normalerweise demineralisiertes Wasser gemeint ist), niedrige Alkohole wie z.B. Ethanol oder Gemische davon, aufgelöst. Selbstverständlich können in diesen Gemischen auch andere Substanzen zusätzlich enthalten sein, wie z.B. Ester, Aldehyde, Ketone, Kohlenwasserstoffe oder auch halogenierte Kohlenwasserstoffe. Als Beispiel für die letztgenannten seien Isobutan, Dichlordifluormethan, Monofluortrichlormethan und andere chlorierte und/oder fluorierte Methane, Ethane oder Propane genannt. Solche Stoffe schließen die verflüssigbaren Gase ein, die in unter Druck stehenden Behältern in flüssigem Zustand verbleiben, fertig für die Anwendung als Sprays.

Besonders bevorzugte Reinigungsmittel dieser Erfindung enthalten als synthetisches organisches Tensid ein anionisches oder nichtionisches Tensid, oder Gemische davon, Builder und/oder Füllstoffe und das Insekt-Repellent.

Diese Reinigungs- oder Waschmittel können in Partikelform oder in flüssiger Form vorliegen. In flüssiger Form enthält es dieselben Einzelkomponenten, jedoch zusätzlich ein flüssiges Medium gegebenenfalls auch emulgierende Stoffe und andere Hilfsstoffe.

Bevorzugte Shampoos zur Reinigung von Polstern oder Teppichen enthalten ebenfalls wasserlösliche Seifen und synthetische waschaktive Stoffe, Builder-Salze, das Insekt-Repellent und meist Wasser als flüssiges Medium. Solche Shampoos können auch als Gel, in Pasten- oder Puderform formuliert werden.

Erfindungsgemäße Festprodukte in Block-, Tafel- oder Stückform (Seifenstücke) können ebenfalls hergestellt werden, die zur Reinigung von Wäsche, Teppichen und/oder harten Oberflächen, wie z.B. Böden und Wände, verwendet werden können.

In all diesen Formulierungen sind die Verhältnisse von Seifen oder synthetischen organischen Tensiden, Builder- und Hilfsstoffen und Insekt-Repellent ähnlich und in weiten Bereichen variierbar. Vorzugsweise sind 1 bis 40 % an Tensiden oder Seifen, 10 bis 90 % an Builder- und Füllstoffen und 0.1 bis 20 % an 3-(N-Butylacetamino)-propionsäureethlyester enthalten (Angaben in Gew.-%). Als Ergänzung (auf 100 Gew.-%) werden meistens Wasser, Alkohole, Hilfsstoffe und/oder emulgierende Stoffe zugegeben.

Die verschiedenen beschriebenen Reinigungsmittel können nach Methoden hergestellt werden, die dem Fachmann bekannt sind. Solche Verfahren einhalten Sprühtrocknen, Trockenmischen, Lösen und/oder Dispergieren und/oder Emulgieren, Mahlen oder auch Pressen.

Wenn die erfindungsgemäßen Reinigungsmittel auf die zu reinigenden Oberflächen durch Sprühen, Wischen, Reiben oder andere Methoden aufgebracht werden, wird das darin enthaltene Insekt-Repellent in einer genügend hohen Konzentration oder Menge auf diesen Oberflächen niedergesetzt, daß es abwehrend gegen die Insekten wirkt.

Besonders bevorzugte Reinigungsmittel dieser Erfindung sind die in flüssiger Form.

Folgende Formulierungen, die als Allzweckreiniger verwendet werden, stellen ganz besonders bevorzugte erfindungsgemäße Ausführungen dar.

Bei diesen Allzweckreinigern werden vorzugsweise amphotere Tenside zum Beispiel auf der Basis von Cocamidoalkylbetain, auch im Gemisch mit anionischen, kationischen und nichtionischen Tenside, eingesetzt. Damit können neutrale Formulierungen ebenso wie alkalische oder saure Mittel hergestellt werden.

Als weiteres amphoteres Tensid für den Einsatz in hochalkalischen oder stark sauren Formulierungen wird vorzugsweise salzfreies Capryliminodipropionat eingesetzt.

Weitere besonders bevorzugte Tensid-Gruppen sind die Aminoxide und die Alkylpolyglucoside, die insbesondere gern mit Betainen und Laurylethersulfaten gemischt werden.

Allzweckreiniger sind, wie der Name schon sagt, universell einsetzbar. Es sind zumeist neutrale bis leicht alkalische Formulierungen.

Erfindungsgemäße Formulierungen dieser Art mit antibakteriellen Zusatzstoffen sind ebenfalls besonders bevorzugt.

Die erfindungsgemäßen Reinigungsmittel wirken insbesondere gut gegen Ameisen und Küchenschaben.

Mit den Reinigungsmitteln der vorliegenden Erfindung stehen somit dem Verbraucher im wesentlichen nicht toxische, und daher sehr umweltfreundliche, aber doch sehr wirksame Produkte zur Verfügung.

Durch Anwendung der erfindungsgemäßen Reinigungsmittel und dem erfindungsgemäßen Verfahren konnte in der Praxis bewiesen werden, daß z.B. signifikant weniger Kakerlaken hinter Schränken oder unter Kühlschränken im Vergleich zu vorher zu finden waren.

Wenn man daher Böden, Wände, Spülbecken, Türen oder Schränke in einem Haus oder einer Wohnung regelmäßig mit den erfindungsgemäßen Reinigungsmitteln behandelt, wird das Auftreten von Kakerlaken oder Ameisen, praktisch auf null reduziert.

Auch ohne weitere Ausführungen wird davon ausgegangen, daß ein Fachmann die obige Beschreibung in weitestem Umfange nutzen kann. Die bevorzugten Ausführungen sind deswegen lediglich als beschreibende, keineswegs als in irgendeine Weise limitierende Offenbarung aufzufassen.

Die vollständige Offenbarung aller vor- und nachstehend aufgeführten Anmeldungen, Patente und Veröffentlichungen sind durch Bezugnahme in diese Anmeldung eingeführt.

Die nachfolgenden Beispiele sollen die Erfindung erläutern.

### Beispiel 1: Allzweckreiniger mit guter Reinigungs- und Insektenabwehrwirkung

| Zusammensetzung: | | |
|---|---|---|
| | | % |
| 3-(N-Butylacetamino)propionsäureethylester (Art.-Nr. 111887) | (1) | 3.000 |
| Tego® Betain F 50 | (2) | 7.500 |
| Ammonyx LO | (2) | 10.000 |
| Texapon N 28 | (3) | 15.000 |
| Trinatriumcitrat-Dihydrat (Art. Nr. 106446) | (1) | 4.000 |
| Natriumcarbonat (Art.-Nr. 106392) | (1) | 3.000 |
| Ethanol 96 % (Art.-Nr. 100971) | (1) | 3.000 |
| Wasser, demineralisiert | | ad 100.000 |

Natriumcarbonat und Trinatriumcitrat werden in Wasser gelöst. Anschließend werden die weiteren Bestandteile in der angegebenen Reihenfolge unter Rühren zugegeben.

### Bezugsquellen:

Merck KGaA, Darmstadt
Th. Goldschmidt AG, Essen
Henkel KGaA, Düsseldorf

### Beispiel 2: Alkalischer Allzweckreiniger

| Zusammensetzung: | | |
|---|---|---|
| | | % |
| 3-(N-Butylacetamino)propionsäureethylester (Art.-Nr. 111887) | (1) | 3.000 |
| Tegotain® 485 | (2) | 10.000 |
| Lutensol A 8 | (3) | 9.000 |
| Trinatriumcitrat-Dihydrat (Art.-Nr. 106446) | (1) | 3.000 |
| Wasser, demineralisiert | | ad 100.000 |

Man löst das Trinatriumcitrat in Wasser. Anschließend gibt man die weiteren Bestandteile in der angegebenen Reihenfolge unter Rühren zu.

### Bezugsquellen:

Merck KGaA, Darmstadt
Th. Goldschmidt AG, Essen
BASF, Ludwigshafen

### Beispiel 3: Antibakterieller Allzweckreiniger

| | | % |
|---|---|---|
| 3-(N-Butylacetamino)propionsäureethylester (Art.-Nr. 111887) | (1) | 3.000 |
| Tego® Betain F 50 | (2) | 5.000 |
| BTC 50 | (2) | 5.000 |
| Trinatriumcitrat Dihydrat (Art.-Nr. 106446) | (1) | 4.000 |
| Natriumcarbonat (Art.-Nr. 106392 | (1) | 3.000 |
| Wasser, demineralisiert | | ad 100.000 |

Natriumcarbonat und Trinatriumcitrat werden in Wasser gelöst. Anschließend werden die weiteren Bestandteile in der angegebenen Reihenfolge unter Rühren zugegeben. Man erhält einen antibakteriell wirkenden Allzweckreiniger mit insektenabwehrender Wirkung.

### Bezugsquellen:

Merck KGaA, Darmstadt
Th. Goldschmidt AG, Essen

## Patentansprüche

1. Verwendung von Reinigungsmitteln, die eine wirksame Menge des Insektenabwehrmittels 3-(N-Butylacet-amino)-propionsäureethylester enthalten, zur Abwehr von Küchenschaben und/oder Ameisen.

2. Verwendung nach Anspruch 1, dadurch gekennzeichet, dass es sich um Reinigungsmittel auf der Basis von wäßrigen oder wäßrig-alkoholischen Lösungen oder in Form von Waschmitteln, Wachsen, Gels, Shampoos, Sprays, Festprodukten, Emulsionen, Cremes oder Dispersionen handelt.

3. Verwendung nach mindestens einem der Ansprüche 1 oder 2, dadurch gekennzeichet, dass das Renigungsmittel 0.1 bis 20 Gew.-% 3-(N-Butylacetamino)-propionsäureethylester, sowie gegebenenfalls ein oder mehrere zusätzliche(s) Insektenabwehrmittel in einer Menge von 0,1 bis 20 Gew.-% enthält.

4. Verwendung nach mindestens einem der Ansprüche 1 bis 3, dadurch gekennzeichet, dass es ein oder mehrere Insektenabwehrmittel aus der Gruppe Diethyltoluamid, 2-Ethyl-1,3-hexandiol, Dimethylphthalat, Dibuthylsuccinat, und/oder ein oder mehrere als Insektenabwehrmittel wirkende ätherische Öle, vorzugsweise aus der Gruppe Citronella-, Menthol-, Lemon-Öl enthält.

5. Verwendung von 3-(N-Butylacetamino)-propionsäureethylester zur Abwehr von Küchenschaben und/oder Ameisen.

6. Verfahren zur Abwehr von Küchenschaben und/oder Ameisen auf Gegenständen, Oberflächen und in Räumen, **dadurch gekennzeichnet, daß** man zur Reinigung ein Mittel, das eine wirksame Menge des Insektenabwehrmittels 3-(N-Butylacet-amino)-propionsäureethylester enthält, einsetzt.

## Claims

1. Use of cleaning compositions which comprise an effective amount of the insect repellent ethyl 3-(N-butylacetamino)propionate for repelling cockroaches and/or ants.

2. Use according to Claim 1, **characterized in that** the cleaning compositions are based on aqueous or aqueous-alcoholic solutions or are in the form of detergents, waxes, gels, shampoos, sprays, solid products, emulsions, creams or dispersions.

3. Use according to at least one of Claims 1 or 2, **characterized in that** the cleaning composition comprises 0.1 to 20% by weight of ethyl 3-(N-butylacetamino)propionate, and optionally one or more additional insect repellents in an amount of from 0.1 to 20% by weight.

4. Use according to at least one of Claims 1 to 3, **characterized in that** it comprises one or more insect repellents from the group consisting of diethyltoluamide, 2-ethyl-1,3-hexanediol, dimethyl phthalate, dibutyl succinate, and/or one or more essential oils which act as insect repellents, preferably from the group consisting of citronella oil, menthol oil and lemon oil.

5. Use of ethyl 3-(N-butylacetamino)propionate for repelling cockroaches and/or ants.

6. Method of repelling cockroaches and/or ants on objects and surfaces and in rooms, **characterized in that** a composition which comprises an effective amount of the insect repellent ethyl 3-(N-butylacetamino)propionate is used for the cleaning.

## Revendications

1. Utilisation de produits nettoyants contenant une quantité efficace du répulsif pour insectes l'ester éthylique de l'acide 3-(N-butylacétamino)propionique pour se protéger des cafards et/ou des fourmis.

2. Utilisation selon la revendication 1, **caractérisée en ce que** les produits nettoyants sont des produits à base de solutions aqueuses ou hydro-alcooliques ou sous forme de lessives, de cires, de gels, de shampooings, de sprays, de produits solides, d'émulsions, de crèmes ou de dispersions.

3. Utilisation selon au moins l'une des revendications 1 et 2, **caractérisée en ce que** les produits nettoyants contiennent 0,1 à 20 % en poids de l'ester éthylique de l'acide 3-(N-butylacétamino)propionique, ainsi qu'éventuellement un ou plusieurs autres répulsifs pour insectes en une quantité comprise entre 0,1 et 20 % en poids.

4. Utilisation selon au moins l'une des revendications 1 à 3, **caractérisée en ce que** les produits nettoyants contiennent un ou plusieurs répulsifs pour insectes choisis dans le groupe constitué par le toluamide de diéthyle, le 2-éthyl-1,3-hexanediol, le phtalate de diméthyle, le succinate de dibutyle et/ou une ou plusieurs huiles essentielles ayant une action de répulsion vis-à-vis des insectes, de préférence choisies dans le groupe constitué par les essences de citronnelle, de menthol ou de citron.

5. Utilisation de l'ester éthylique de l'acide 3-(N-butylacétamino)propionique pour se protéger des cafards et/ou des fourmis.

6. Procédé pour se protéger des cafards et/ou des fourmis sur les objets, surfaces et dans des pièces, **caractérisé en ce que** l'on utilise pour nettoyer une composition contenant une quantité efficace du répulsif pour insectes l'ester éthylique de l'acide 3-(N-butylacétamino)propionique.
